# EUROPEAN PATENT APPLICATION

(11) **EP 1 980 183 A2**
(43) Date of publication of application: **15.10.2008**
(21) Application number: 08154017.1
(22) Date of filing: 03.04.2008
(51) Int. Cl.: A47J 31/36

(54) **Infusion unit for machines for the production of an aromatic drink**

(30) Priority: 04.04.2007 IT MI20070695
(71) Applicant: Capitani Steam Tecnology S.R.L., 22070 Solbiafe Comasco (IT)
(72) Inventor: Capitani, Emilio, 22070 Albiolo (Como) (IT); Pineschi, Massimiliano, 41010 Villanova (Modena) (IT)
(74) Representative: Pulieri, Gianluca Antonio

(57) **Abstract**

The infusion unit for a machine producing drinks, comprising a frame supporting a first part defining an infusion chamber able to accommodate a capsule of aromatic essence for the production of the drink, a second part moving along a translation axis between a closed position and an open position of the infusion chamber, a lever bearing a thrust cam of the second part towards the closed position of the infusion chamber, and automatic return mechanism to the open position of the infusion chamber.

## Description

The present invention relates to an infusion unit specifically for coffee machines, but more generally also for machines designed to produce drinks by means of infusion of an aromatic substance.

A known infusion unit, in the coffee machine field, has a first part defining an infusion chamber able to accommodate a capsule of coffee and a second part which moves in relation to the first part between a closed position and an open position of the infusion chamber.

The first part of the infusion unit has an infusion dispenser while the second part has a hydraulic connection to the boiler of the coffee machine which supplies it with hot water under pressure.

Various mechanisms exist which deal with opening and closing the infusion chamber, as well as filling at the top with virgin coffee and emptying at the bottom by effect of gravity of the used coffee.

Such mechanisms often suffer from limited efficacy, limited precision of movement and limited duration over time which may determine malfunctioning or hydraulic leaks with consequent reduced performance and the production of a cup product with organoleptic characteristics far from those desired

Specifically, the known mechanisms for the extraction of the used coffee often have a complex structure which makes them expensive as well as not very reliable.

The technical task which the present invention sets itself is therefore to produce an infusion unit for a machine producing drinks which makes it possible to eliminate the technical drawbacks complained of in the known technique.

Within the sphere of this technical task one purpose of the invention is to produce an infusion unit which proves efficient, precise in its movements and long-lasting so as to provide optimal performance and, specifically, to ensure a cup product fully reflecting the desired specifications.

Another purpose of the invention is to produce an infusion unit with simple but precise mechanisms for its movements so as to prove inexpensive and more reliable.

The technical task, as well as these and other purposes, according to the present invention, are achieved by producing an infusion unit conforming to claim 1.

Further characteristics of the present invention are defined, in addition, in the subsequent claims.

Further characteristics and advantages of the invention will be more evident from the description of a preferred but non-exclusive embodiment of the infusion unit according to the invention, shown by way of a non-limiting example with reference to the attached figures wherein:

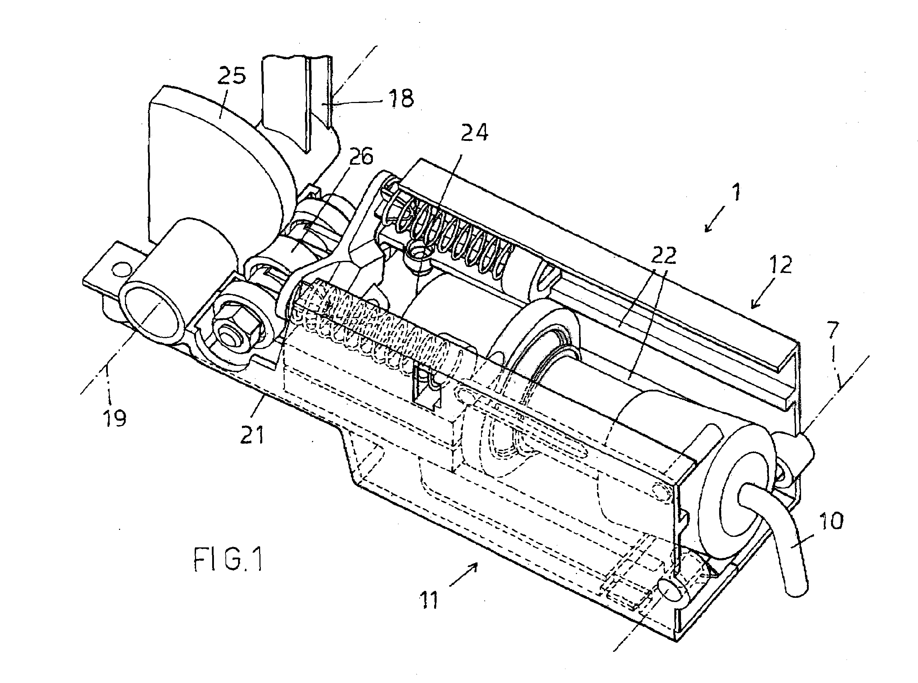

- figure 1 -shows a perspective view of the infusion unit according to a preferred embodiment of the invention, in the position with the infusion chamber open;

figure 2 is a view of the infusion unit in figure 1 cross-sectioned on a vertical central plane;

figure 2a is an analogous view to that of figure 2, with the infusion unit in an embodiment variation;

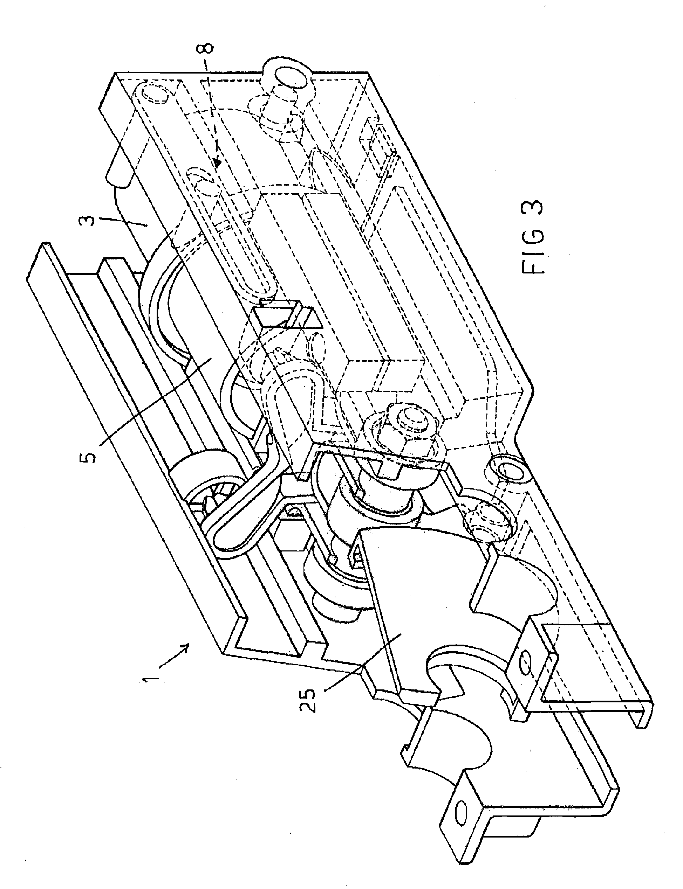

figure 3 is a perspective view of the infusion unit in figure 1, in the position with the infusion chamber closed; and

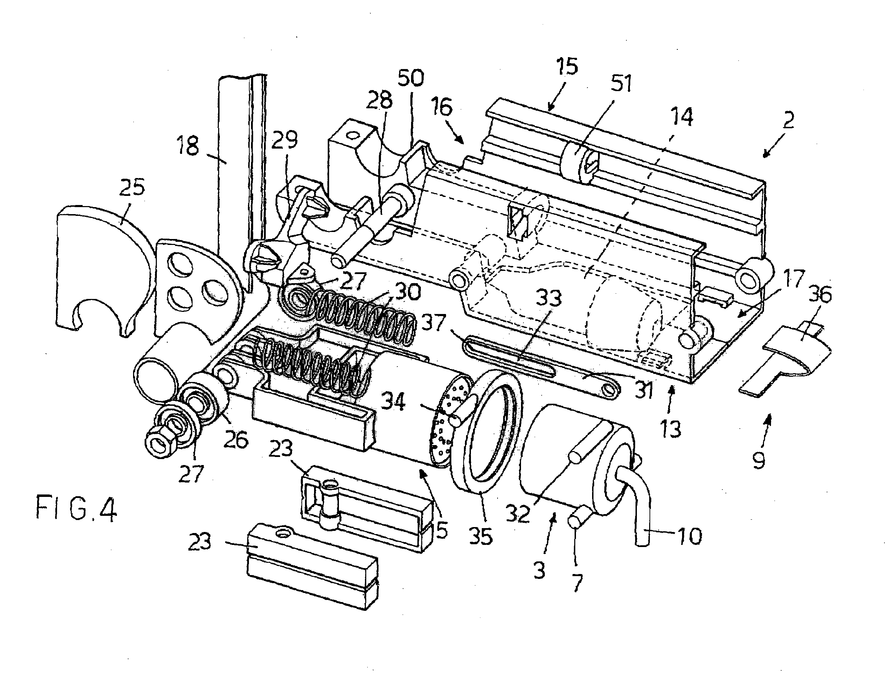

figure 4 is an exploded perspective view of the infusion unit in figure 1.

With reference to the figures referred to, in the specific case and merely as an example, an infusion unit for an expresso coffee machine is shown, globally denoted by the reference numeral 1.

The infusion unit 1 comprises a frame 2 supporting a first part 3 defining an infusion chamber 4 able to accommodate a capsule of coffee, for example a capsule 21 containing coffee powder, and a second part 5 moving along a translation axis 6 between a closed position and an open position of the infusion chamber 4.

The translation axis 6 is preferably horizontal.

The first part 3 is hinged to the frame 2 along a hinging axis 7 orthogonal to the translation axis 6, and can be moved from a position for filling with the capsule of coffee, in which it is aligned with the second part 5 parallel to the translation axis 6, and an emptying position in which it is inclined downwards so as to determine the extraction of the used capsule of coffee from the infusion chamber 4 by means of dropping by gravity.

The hinging axis 7 too is preferably horizontal.

Advantageously, the infusion unit 1 also comprises a first means 8 of automatic return of the first part 3 towards the emptying position during the opening of the infusion chamber 4 and second means 9 of automatic return of the first part 3 towards the filling position during closure of the infusion chamber 4.

The first part 3 is joined to a dispenser 10 of the infusion produced in the infusion chamber 4, while the second part 5 is joined to a hydraulic line (not shown) able to be joined to the boiler of the expresso coffee machine to supply the infusion chamber 4 with the hot water needed to make the infusion.

The frame 2 is a box shape so as to contain the first part 3 and the second part 5 and is essentially composed of a parallelepiped having a longitudinal axis parallel to or coinciding with the translation axis 6 of the second part 5, open bases 16 and 17, closed sides 11 and 12, a bottom side 13 having a window 14 for emptying the used capsule of coffee, and an open upper side 15.

The infusion unit 1 comprises, advantageously, a lever 18 having a cam 25 for moving the second part 5 towards the closed position of the infusion chamber 4.

The lever 18 is pivoted on an extension 20 of the bottom side 13 of the frame 2 which extends beyond the base 16 of the frame 2.

The rotation axis 19 of the lever 18 is parallel to the hinging axis 7 of the first part 3 which is found essentially at the height of the opposite base 17 of the frame 2.

The frame 2 has guide mechanisms for guiding the translation of the second part 5, comprising specifically, a track 22 which extends along the inner surface of each of the sides 11 and 12 parallel to the translation axis 6.

On each track 22 a corresponding guide block 23 joined to the second part 5, engages in a sliding manner.

The guide blocks 23 are a parallelepiped shape and have a preferential longitudinal extension parallel to the translation axis 6 and are anchored in diametrically opposed points of the lateral surface of the second part 5 from the rear base 24 of which they protrude.

To assist the sliding of the second part 5, the cam 25 of the lever 18 engages with the second part 5 not directly but rather through the interposition of a main anti-friction bearing 26 joined in translation to the second part 5.

The anti-friction bearing 26 combined with auxiliary lateral anti-friction bearings 27, are strung together on a pin 28 oriented parallel to the rotation axis 7 of the first part 3 and to the rotation axis 19 of the lever 18, and able to roll along the upper surface of the extension 20 of the bottom side 13 of the frame 2.

The pin 28 is fixed to a support 50 of the second part 5 placed behind the base 24 of the latter.

The infusion unit 1 is advantageously also fitted with an automatic return mechanism to the open position of the infusion chamber 4.

The automatic return mechanism to the open position of the infusion chamber 4 comprises one or more springs 30 able to be wound during the advancement of the second part 5 towards the closed position.

The spring elements 30 are interposed between the second part 5 or a part joined to it in translation and the frame 2 or a part fixed in relation to it.

Each spring element 30 is, specifically a helical spring positioned with its axis parallel to the translation axis 6 and held at its extremities between a plate 29 held by the support 50 and a catch 51 present on the inner surface of each side wall 11 and 12 of the frame 2.

The first return mechanism 8 comprises an arm 31 transversal to the hinging axis 7 of the first part 3 and attached to a support pin 32 in turn attached to the first part 3 in a diametrically opposite position to the hinging axis 7.

The arm 31 has a slot 33 in its longitudinal direction inside which a pin 34 is positioned which drags the arm 31, joined to a collar 35 attached to the second part 5.

The second return mechanism 9 comprises rather an elastic organ 36, specifically a leaf spring, compressed between the inner surface of the bottom side 13 of the frame 2 and the lateral side of the first part 3.

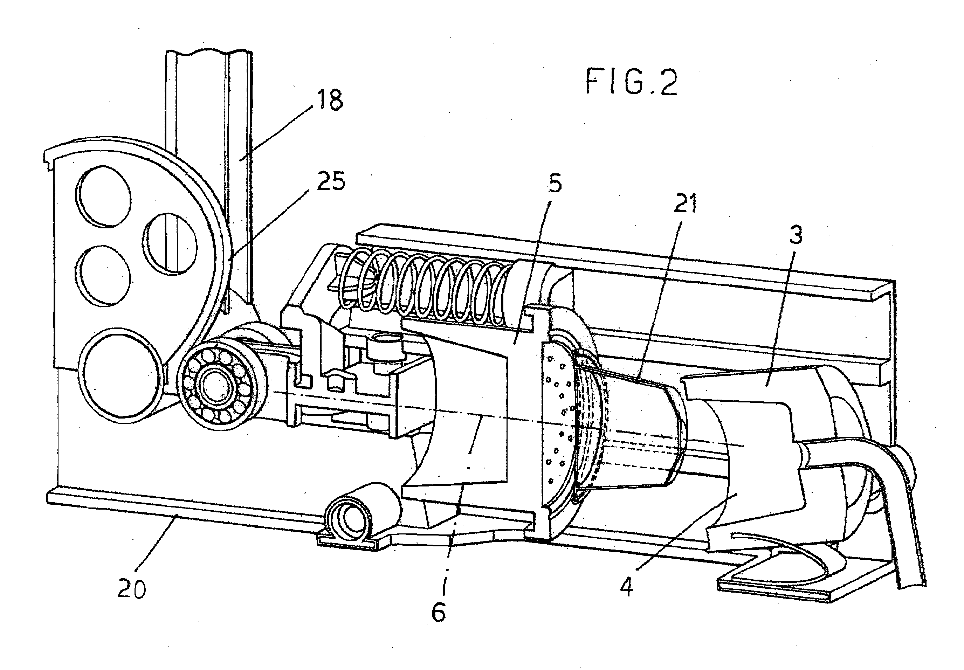

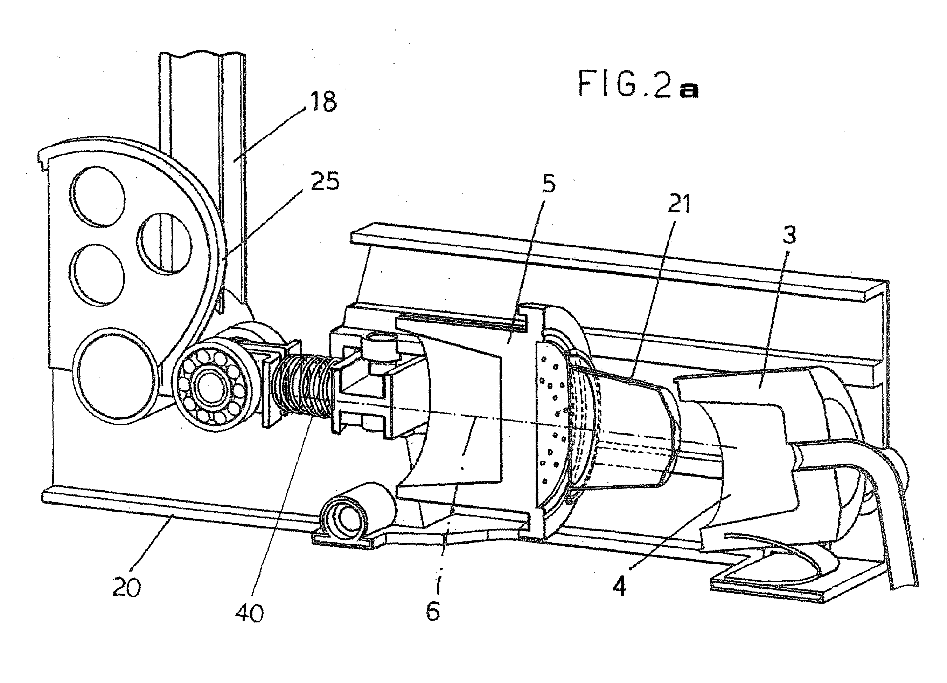

In one embodiment variation illustrated in figure 2a, the support 50 of the second part 5 is joined to the moving mechanisms 25-27 by means of an elastic element 40, for example a mechanical spring, able to compensate the wear caused by friction of the moving parts in contact with each other.

It is worth noting, lastly, that the automatic return mechanism to the open position of the infusion chamber 4 may comprise, in addition or instead of the spring elements 30, a counter-cam activated by the same lever 18 or other equivalent mechanism.

The functioning of the infusion unit 1 according to the invention appears evident from what has been described and illustrated and, specifically, is as follows.

The lever 18 is raised and the second part 5 is in a rearward open position of the infusion chamber 4.

In this position the drag pin 34, by engaging with an extremity 37 of the slot 33, keeps the arm 31 in a rearward position, the reverse force generated by the spring elements 30 and transmitted by the drag pin 34 to the arm 31 being greater than the resistance to being pulled back of the arm 31 generated by the elastic organ 36. With the arm 31 in a rearward position the first part 3 is turned downwards in the emptying position.

When the lever 18 is lowered, the cam 25 pushes the second part 5 forwards towards the closed position of the infusion chamber 4. During this movement, on one side the spring elements 30 are wound and compressed, while on the other the drag pin 34 releases its grip of the arm 31, disengaging from the extremity 37 of the slot 33 and enabling rotation of the first part 3 towards the filling position thanks to the effect of the elastic organ 36 which is no longer contrasted.

The closure of the infusion chamber 4 previously filled with the capsule of coffee inside it occurs when the first part 3 is perfectly aligned with the second part 5.

On completion of the infusion the lever 18 is raised to open the infusion chamber 4 and empty the used capsule of coffee.

During the opening of the lever 18 the anti-friction bearing 26 runs along the cam 25 pressed against it by the springs 30 which unwind, extending in such a manner as to cause the rearward movement of the second part 5.

The drag pin 34 moves backwards until it intercepts the extremity 37 of the slot 33. At this point the drag pin 34 reactivates its grip on the arm 31 forcing it backwards. The rearward movement of the arm 31 causes the rotation of the first part 3 towards the emptying position.

In practice it has been seen how the infusion unit according to the invention proves particularly advantageous given that it is simple to construct and reliable but at the same time extremely precise in its kinematism.

The infusion unit thus conceived may be subjected to numerous modifications and variations, all falling within the scope of the invention; furthermore, the parts may be replaced by other parts technically equivalent.

In practice the materials used, as well as the dimensions, may be varied according to requirements and to the state-of-the-art technique.

## Claims

1. Infusion unit for machines designed to produce drinks, of the type comprising a frame supporting a first part defining an infusion chamber able to accommodate a capsule of aromatic essence for the production of said drink and a second part moving along a translation axis between a closed position and an open position of said infusion chamber, **characterised by** the presence of a lever bearing a thrust cam of said second part towards said closed position of said infusion chamber, and automatic return mechanisms to said open position of said infusion chamber.

2. Infusion unit according to claim 1, **characterised by** the fact that said first part is hinged to said frame along a hinging axis orthogonal to said translation axis, and which can be turned to a filling position of said capsule wherein it is aligned to said second part parallel to said translation axis and an emptying position wherein it is inclined downwards for the extraction of said used capsule from said infusion chamber by means of dropping by gravity.

3. Infusion unit according to one or more of the previous claims, **characterised by** the presence of a first means of automatic return of said first part towards said emptying position during the opening of said infusion chamber, and second automatic return mechanisms of said first part towards said filling position during closure of said infusion chamber.

4. Infusion unit according to one or more of the previous claims, **characterised by** the fact that said translation axis is horizontal.

5. Infusion unit according to one or more of the previous claims, **characterised by** the fact that said hinging axis is horizontal.

6. Infusion unit according to one or more of the previous claims, **characterised by** the fact that said lever is hinged to said frame and has a rotation axis parallel to said hinging axis of said first part.

7. lnfusion unit according to one or more of the previous claims, **characterised by** the fact that said cam engages with said second part through the interposition of an anti-friction bearing joined in translation to said second part.

8. lnfusion unit according to one or more of the previous claims, wherein between said cam and said second part there is a flexible element to compensate wear.

9. Infusion unit according to one or more of the previous claims, **characterised by** the fact that said return mechanism to said open position comprises one or more springs able to wind up during the movement of said second part towards said closed position.

10. Infusion unit according to one or more of the previous claims, **characterised by** the fact that said springs are interposed between said second part or a part joined to it in translation and said frame or a part fixed in relation to it.

11. Infusion unit according to one or more of the previous claims, **characterised by** the fact that said frame has at least one track parallel to said translation axis in which at least one guide block joined to second part engages in a sliding manner.

12. Infusion unit according to one or more of the previous claims, **characterised by** the fact that said block is a parallelepiped having a longitudinal axis parallel to said translation axis.

13. Infusion unit according to one or more of the previous claims, **characterised by** the fact that said first return mechanism comprises an arm transversal to said hinging axis of said first part and attached to a support pin in turn attached to said first part in a position diametrically opposed to said hinging axis, said arm presenting in a longitudinal direction a slot inside which a drag pin of said arm is positioned, said drag pin being joined to said second part.

14. Infusion unit according to one or more of the previous claims, **characterised by** the fact that said second return mechanism comprises an elastic element compressed between a bottom side of said frame and the lateral side of said first part.

15. Infusion unit according to one or more of the previous claims, **characterised by** the fact that said elastic element is a leaf spring.

16. Infusion unit according to one or more of the previous claims, **characterised by** the fact of comprising at least one further anti-friction bearing on the bottom of said frame, joined in translation to said second part and positioned laterally to said anti-friction bearing so as to assist the translation of said second part.

17. Machine for the production of a drink **characterised by** the fact of having an infusion unit conforming to one or more of the previous claims.
